# EUROPEAN PATENT APPLICATION

(11) **EP 1 690 840 A1**
(43) Date of publication of application: **16.08.2006**
(21) Application number: 04773460.3
(22) Date of filing: 22.09.2004
(51) Int. Cl.: C03C 23/00, B01J 19/08

(54) **PRODUCTION METHOD OF HARDLY-ELECTRIFIABLE GLASS SUBSTRATE AND HARDLY-ELECTRIFIABLE GLASS SUBSTRATE OBTAINED BY IT**

(30) Priority: 22.09.2003 JP 2003330327
(71) Applicant: Air Water Inc., Sapporo-shi, Hokkaido 060-0003 (JP)
(72) Inventor: ITO, Shigeki, c/o Air Water Inc., Hirakata-shi, Osaka 5730136 (JP); GODA, Shinji, c/o Air Water Inc., Hirakata-shi, Osaka 5730136 (JP); KITANO, Kenzo, c/o Air Water Inc., Hirakata-shi, Osaka 5730136 (JP)
(74) Representative: Wakerley, Helen Rachael
(86) International application number: PCT/JP2004/014282
(87) International publication number: WO 2005/028392

(57) **Abstract**

The present invention relates to an antistatic glass substrate production method which makes a glass substrate less electrifiable by plasma-treating the glass substrate, and an antistatic glass substrate produced by the method. In the present invention, the glass substrate is placed in an atmospheric pressure plasma generating apparatus adapted to generate an atmospheric pressure plasma between electrodes thereof for treatment of an object with the atmospheric pressure plasma, and the glass substrate is imparted with an antistatic property by the atmospheric pressure plasma generated in the apparatus. According to the invention, the glass substrate is treated with the atmospheric pressure plasma thereby to be made less electrifiable. Thus, adhesion of dust to the antistatic glass substrate can be suppressed until the glass substrate is incorporated in a liquid crystal display or a like product.

## Description

### TECHNICAL FIELD

The present invention relates to an antistatic glass substrate production method which makes a glass substrate less electrifiable by plasma-treating the glass substrate, and an antistatic glass substrate produced by the method.

### BACKGROUND ART

Glass substrates are used for display devices such as liquid crystal displays and organic EL displays and for architecture, furniture and the like in a variety of fields. The glass substrates are transported to a storage site, for example, by a roller conveyer after production thereof. In the storage site, the glass substrates are stored in stacked relation with shock absorbers such as paper sheets interposed therebetween for protection thereof.

However, such a glass substrate is repeatedly brought into and out of contact with rollers of the roller conveyer during the transport thereof on the roller conveyer thereby to be electrified. Further, when the glass substrate is transported out of the storage site, the glass substrate is separated from the shock absorbers thereby to be electrified. Where the glass substrate is thus electrified before being incorporated in the liquid crystal display or a like product, dust is liable to adhere to the glass substrate due to the electrification. In general, when two objects of different materials contact each other, electrons migrate from one of the two objects to the other. When the objects are thereafter separated from each other, the one object is positively electrified and the other object is negatively electrified.

If the glass substrate is electrified, electric charges are generally removed from the substrate by a static eliminator. Besides, a dust adhesion suppressing method has been proposed in which undulations of a glass substrate are controlled for suppression of the electrification (JP-A-2002-72922).

However, the removal of the electric charges by the static eliminator is not intended to suppress the electrification of the glass substrate per se, so that the adhesion of the dust cannot be sufficiently suppressed. Further, the aforesaid method involving the control of the undulations of the glass substrate is not practical with the need for very precise control in the glass substrate production process.

In view of the foregoing, it is an object of the present invention to provide an antistatic glass substrate production method which makes a glass substrate per se less electrifiable, and an antistatic glass substrate produced by the method.

### DISCLOSURE OF THE INVENTION

According to a first aspect of the present invention to achieve the aforesaid object, there is provided an antistatic glass substrate production method which comprises: placing a glass substrate in an atmospheric pressure plasma generating apparatus adapted to generate an atmospheric pressure plasma between electrodes thereof for treatment of an object with the atmospheric pressure plasma; and imparting the glass substrate with an antistatic property by the atmospheric pressure plasma generated in the apparatus. According to a second aspect of the invention, there is provided an antistatic glass substrate produced by the aforesaid production method.

Inventors of the present invention conducted intensive studies on a glass substrate production method for making a glass substrate less electrifiable. In the course of the studies, the inventors found that the glass substrate is made less electrifiable by plasma-treating a surface of the glass substrate with an atmospheric pressure plasma generated, and attained the present invention. The reason why the glass substrate is made less electrifiable is not clarified, but supposedly because a surface portion of the glass substrate is modified by the atmospheric pressure plasma.

Further, the inventors found that the antistatic glass substrate produced by the aforesaid method is excellent in electric charge attenuating property. That is, the inventors found that, even if the antistatic glass substrate is forcedly electrified by applying a high voltage to the antistatic glass substrate, electric charges are discharged from the antistatic glass substrate more quickly than from an ordinary glass substrate not plasma-treated. The reason for this is not clarified, but the electric discharge from the antistatic glass substrate is facilitated supposedly because the surface portion of the glass substrate is modified.

### BRIEF DESCRIPTION OF THE DRAWING

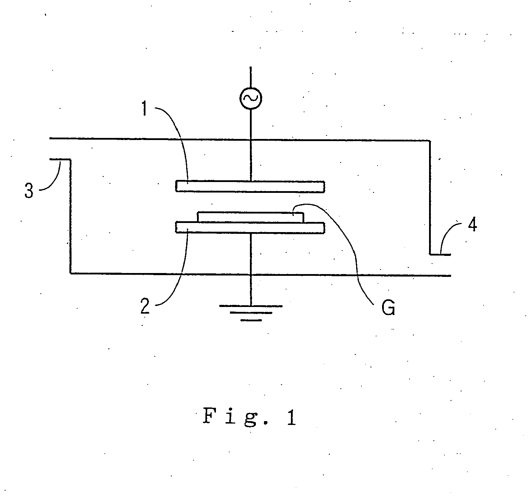

Fig. 1 is an explanatory diagram illustrating an embodiment of an antistatic glass substrate production method according to the present invention.

### BEST MODE FOR CARRYING OUT THE INVENTION

The present invention will hereinafter be described in detail on the basis of the drawing.

Fig. 1 illustrates an antistatic glass substrate production method according to the present invention. In this embodiment, a glass substrate G is placed in an atmospheric pressure plasma generating apparatus. In the apparatus, an atmospheric pressure plasma is generated, and a surface of the glass substrate G is plasma-treated with the atmospheric pressure plasma.

The atmospheric pressure plasma generating apparatus has an electrode pair including a higher voltage electrode 1 and a lower voltage electrode 2 disposed in spaced opposed relation. The glass substrate G is located in at least a part of a space defined between the higher voltage electrode 1 and the lower voltage electrode 2. The atmospheric pressure plasma generating apparatus has an inlet port 3 through which a gas to be used for the atmospheric pressure plasma is fed and an outlet port 4 through which the used gas is discharged.

The glass substrate G is plasma-treated, for example, in the following manner. First, a single glass substrate G is taken out and, as required, air is sprayed over the surface of the glass substrate G to remove dust and the like from the surface of the glass substrate G. Then, the glass substrate G is placed in the space between the higher voltage electrode 1 and the lower voltage electrode 2 in the atmospheric pressure plasma generating apparatus. In Fig. 1, the glass substrate is placed on the lower voltage electrode 2, but this arrangement is not limitative. The glass substrate may be supported by a support member provided between the higher voltage electrode 1 and the lower voltage electrode 2. The gas to be used for the atmospheric pressure plasma is supplied as an ambient gas. Subsequently, a voltage is applied between the higher voltage electrode 1 and the lower voltage electrode 2, whereby the atmospheric pressure plasma is generated. Thus, the surface of the glass substrate G is plasma-treated with the atmospheric pressure plasma. By this plasma treatment, the surface portion of the glass substrate G is modified to be made less electrifiable.

Even if the resulting antistatic glass substrate is brought into contact with any other object, the antistatic glass substrate is less liable to be electrified due to the modification by the plasma treatment.

Further, the antistatic glass substrate is excellent in electric charge attenuating property. Even if the antistatic glass substrate is forcedly electrified by applying a high voltage to the antistatic glass substrate, electric charges are discharged from the antistatic glass substrate G more quickly than from an ordinary glass substrate not plasma-treated. The electric discharge is facilitated supposedly because the surface portion of the glass substrate G is modified.

More specifically, the ambient gas to be used for the atmospheric pressure plasma is the following gas (A) or a gas mixture containing the following gas (A) as a main component and the following gas (B), but not particularly limited thereto. The gas (A) or the gas mixture may be moisturized into a moist gas. More preferably, the ambient gas is argon. With the use of this gas, the antistatic property is improved, though the reason for this is not clarified. Particularly, where the gas mixture is used, the content of the gas (B) in the gas mixture is preferably not higher than 20vol% (including 0vol%, which means that the ambient gas is the gas (A)). If the content of the gas (B) is higher than 20vol%, the antistatic property of the antistatic glass substrate tends to be deteriorated. The moist gas is herein defined to be a gas obtained by causing the gas
(A) or the gas mixture to contain moisture by bubbling or the like.
(A) At least one selected from the group consisting of argon, helium, neon, xenon and nitrogen
(B) At least one selected from the group consisting of oxygen gas and hydrogen gas

The voltage to be applied between the higher voltage electrode 1 and the lower voltage electrode 2 for the generation of the atmospheric pressure plasma is not particularly limited, as long as the atmospheric pressure plasma can be generated. The voltage is typically in the range of 1kV to 10kV. The frequency of a power source for the generation of the atmospheric pressure plasma is not particularly limited, but is typically in the range of 1kHz to 20kHz. However, the frequency may be 13.56MHz in a MHz band, or higher in a GHz band.

A period (plasma treatment period) during which the atmospheric pressure plasma is generated is not particularly limited, but is typically in the range of 0.1 second to 10 minutes. Electric power (irradiation energy) is not particularly limited, but is typically in the range of 0.1 to 20000mW·min/cm².

The atmospheric pressure plasma not only improves the antistatic property of the glass substrate G, but also has a cleaning effect for removing impurities such as organic substances adhering to the surface of the glass substrate G in the glass substrate production process and a hydrophilic property imparting effect required for the cleaning.

Since the glass substrate G is of a dielectric material, arc discharge can be suppressed by locating the glass substrate G between the higher voltage electrode 1 and the lower voltage electrode 2. Thus, the higher voltage electrode 1 and the lower voltage electrode 2 can be protected, so that the service lives of the higher voltage electrode 1 and the lower voltage electrode 2 are prolonged. Further, the atmospheric pressure plasma can be stabilized by the suppression of the arc discharge. Therefore, the glass substrate G can be uniformly imparted with the antistatic property.

In the aforesaid embodiment, the glass substrate G is placed between the higher voltage electrode 1 and the lower voltage electrode 2 opposed to each other in the atmospheric pressure plasma treatment, but this arrangement is not limitative. The glass substrate G may be treated by such a method that the atmospheric pressure plasma generated between the electrodes is deflected toward a predetermined portion of the surface of the glass substrate G located outside the space between the electrodes by a gas flow, an electric field or a magnetic action (by a remote plasma).

Next, Examples will be described in conjunction with Comparative Example.

### Example 1

A glass substrate (Corning's 1737) for a liquid crystal display was plasma-treated with an atmospheric pressure plasma in the same manner as in the aforesaid embodiment. The glass substrate G had a size of 75mmx25mmx0.7mm (thickness). Argon was used alone as the ambient gas for the atmospheric pressure plasma. The higher voltage electrode 1 and the lower voltage electrode 2 each had a planar shape and a size of 320mmx230mm, and an inter-electrode distance was 5mm. An AC power source having a frequency of 5kHz was used as the power source for applying a voltage of 3kV between the higher voltage electrode 1 and the lower voltage electrode 2. The atmospheric pressure plasma treatment was performed for 10 seconds. The electric power (irradiation energy) was 34mW·min/cm².

### Example 2

The treatment was performed in substantially the same manner as in Example 1, except that a gas mixture containing argon (99vol%) and hydrogen (1vol%) was used as the ambient gas for the atmospheric pressure plasma.

### Example 3

The treatment was performed in substantially the same manner as in Example 1, except that a gas mixture containing argon (99vol%) and oxygen (1vol%) was used as the ambient gas for the atmospheric pressure plasma.

### Comparative Example 1

The same glass substrate G as in Example 1 was prepared, and treated with no atmospheric pressure plasma.

### Antistatic property

The antistatic glass substrates of Examples 1 to 3 and the glass substrate G of Comparative Example 1 thus obtained were each electrified by reciprocating an industrial wiper (Crecia's KIMWIPE S-200) at a rate of one reciprocation per second on the surface thereof 20 times. Immediately after the completion of the electrification, the amounts of electric charges were measured by means of a static electricity meter (Simco Japan' s FMX-002). As a result, the amounts of the electric charges on the antistatic glass substrates of Examples 1 to 3 were 28%, 54% and 25%, respectively, of the amount of the electric charges on the glass substrate of

### Comparative Example 1.

As can be understood from the results, the antistatic glass substrates of Examples 1 to 3 are less electrifiable than the glass substrate G of Comparative Example 1.

When helium, neon, xenon and nitrogen were each used instead of argon in Examples, substantially the same results as in Examples were obtained.

When argon gas moisturized by bubbling at 20°C was used in Examples, substantially the same results as in Examples were obtained.

### INDUSTRIAL APPLICABILITY

In the antistatic glass substrate production method according to the present invention, the atmospheric pressure plasma treatment is performed on the glass substrate, whereby the glass substrate is made less electrifiable. Thus, the adhesion of dust can be suppressed until the antistatic glass substrate is incorporated in the liquid crystal display or a like product.

Where the following gas (A) or a gas mixture containing the following gas (A) as a main component and the following gas (B) is used as the ambient gas for the atmospheric pressure plasma, the glass substrate is similarly made less electrifiable:
(A) At least one selected from the group consisting of argon, helium, neon, xenon and nitrogen
(B) At least one selected from the group consisting of oxygen gas and hydrogen gas.

Where the gas (A) or the gas mixture is moisturized into a moist gas, the glass substrate is similarly made less electrifiable.

Particularly, where the content of the gas (B) in the ambient gas is not higher than 20vol%, the antistatic property is further improved.

The inventive antistatic glass substrate produced by the aforesaid production method has an antistatic property and, even if the glass substrate is electrified, electric charges are quickly discharged from the glass substrate. Thus, the adhesion of the dust can be suppressed.

## Claims

1. An antistatic glass substrate production method comprising:
placing a glass substrate in an atmospheric pressure plasma generating apparatus adapted to generate an atmospheric pressure plasma between electrodes thereof for treatment of an object with the atmospheric pressure plasma; and
imparting the glass substrate with an antistatic property by the atmospheric pressure plasma generated in the apparatus.

2. An antistatic glass substrate production method as set forth in claim 1, wherein the following gas (A) or a gas mixture containing the following gas (A) as a main component and the following gas (B) is used as an ambient gas for the atmospheric pressure plasma:
(A) At least one selected from the group consisting of argon, helium, neon, xenon and nitrogen
(B) At least one selected from the group consisting of oxygen gas and hydrogen gas.

3. An antistatic glass substrate production method as set forth in claim 2, wherein the gas (A) or the gas mixture is moisturized into a moist gas.

4. An antistatic glass substrate production method as set forth in claim 2 or 3, wherein a content of the gas (B) in the ambient gas is not higher than 20vol%.

5. An antistatic glass substrate produced by an antistatic glass substrate production method as recited in any one of claims 1 to 4.
